# EUROPEAN PATENT APPLICATION

(11) **EP 1 764 139 A1**
(43) Date of publication of application: **21.03.2007**
(21) Application number: 06019285.3
(22) Date of filing: 14.09.2006
(51) Int. Cl.: A63F 13/00

(54) **Video game processing method, video game processing apparatus and video game processing program**

(30) Priority: 15.09.2005 JP 2005269060
(71) Applicant: Kabushiki Kaisha Square Enix (also trading as Square Enix Co., Ltd.), Tokyo 151-8544 (JP)
(72) Inventor: Itou, Hiroyuki c/o Square Enix Co., Ltd., Tokyo 151-8544 (JP)
(74) Representative: Grünecker, Kinkeldey, Stockmair & Schwanhäusser Anwaltssozietät

(57) **Abstract**

In a license confirmation and setting interruption process, a controller, generates a license setting screen for a predetermined player character A, and displays the generated license setting screen on an image display portion. Upon receiving a selection area movement request, which is a request for a movement of a cursor to select a license in accordance with an operation of an input portion, in case that it is a license fulfilling selection allowance condition, and there are sufficient life points (LPs), the controller moves the cursor to an object requested by the selection area movement request. Upon receiving a license acquisition request, the controller subtracts the LPs needed to set the selected license from remaining LPs acquired and possessed by player character A, and sets the selected license for player character A.

## Description

The present disclosure relates to subject matter contained in Japanese Patent Application No. 2005-269060, filed on September 15, 2005, the disclosure of which is expressly incorporated herein by reference in its entirety.

The present invention relates to a technology for controlling a progress of a video game which displays a setting map for setting an ability of a character on a display screen in accordance with an operation input by a player during the game in progress, and sets the ability of the character based upon the operation input by the player.

To date, various games called RPG's (role playing game: a player acts a part of a certain character in a game world and, while enjoying a process of growing through a variety of experiences, achieves a prescribed aim) have been provided.

In the role playing games, various video games are known in which an ability of a player character that functions in a battle scene may be set as needed. For example, in one of those video games, a setting map called a "skill tree" is used for setting a character's ability. The skill tree is prepared for each of the abilities of three systems that are settable for the character. The abilities are decided and set for the character based upon a score acquired during a progress of a game and an operation by a player.

Because each of the character's abilities are set by using a setting-screen corresponding to each of the abilities to be set, not only has it been difficult to confirm a setting condition for the abilities, but it has also been a problem that the operation of setting the abilities is troublesome and monotonous.

In order to solve such problems, for example, Japanese Patent No. 3440265 provides a video game that displays a setting map on a display screen. The video game displays points on a path of the setting map, points where basic abilities of the player character are provided and points where special abilities of the player character are provided in accordance with an operation input by the player. A user can set the basic abilities, or the special abilities and the like, by positioning a marker on the path of the setting map.

Although there is a video game that allows a user to set the basic ability and special ability for a player character, for example, by means of the technology disclosed in Japanese Patent No.3440265, there exists, however, a need for a video game in which setting and confirming a character's ability is made simpler and easier, and which enhances a users' enjoyment of the video game.

It is an object of the invention to address the problem stated above. It is also an object of the present invention to make the setting and confirmation of a character's ability simpler and easier, and to further enhance the users' (players') enjoyment.

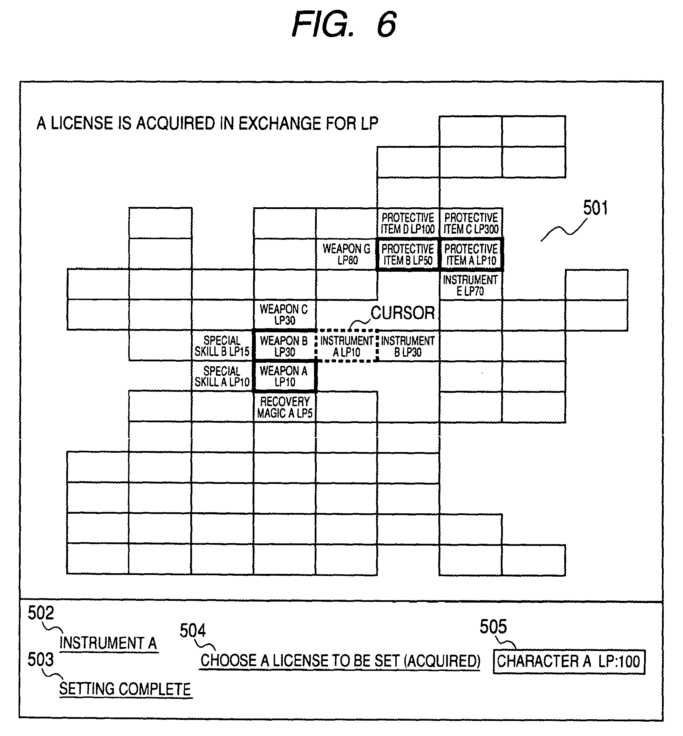

According to a first aspect of the invention, there is provided a video game processing method that controls a progress of a video game that displays a setting map for setting an ability (for example, an ability to use a weapon or protective item, an ability to use a magic action or special skill, etc.) of a character on a display screen (for example, an image display portion 51) in accordance with an operation input by a player during the game in progress, and sets the ability of the character based on the operation input by the player. The method includes displaying, on the display screen, the setting map (for example, an ability setting map 501 shown in Fig. 6). The setting map includes an arrangement of a plurality of objects, including objects to which basic abilities are correlated and objects to which special abilities are correlated, which abilities can be set for the character (for example, step S122). The method further includes deciding at least one object, from among the objects arranged on the setting map, to be made selectable in accordance with the operation input by the player based upon a score acquired during the progress of the video game, and the object to which the ability previously set is correlated from among the objects arranged on the setting map (for example, steps S124 and S125). The method further includes receiving a selection instruction in accordance with the operation input by the player for the object decided as being selectable (for example, step S126). The method further includes receiving a setting instruction for the ability correlated to the object which has received the selection instruction in accordance with the operation input by the player (for example, step S127). The method further includes subtracting the score correlated to the object that has received the setting instruction from the score acquired during the progress of the video game (for example, step S128). The method further includes setting the ability correlated to the object that has received the setting instruction for the character (for example, step S129).

with such a configuration, a setting and confirmation of the character's ability becomes simpler and easier to do, and it becomes possible to enhance a users' (players') enjoyment of the video game.

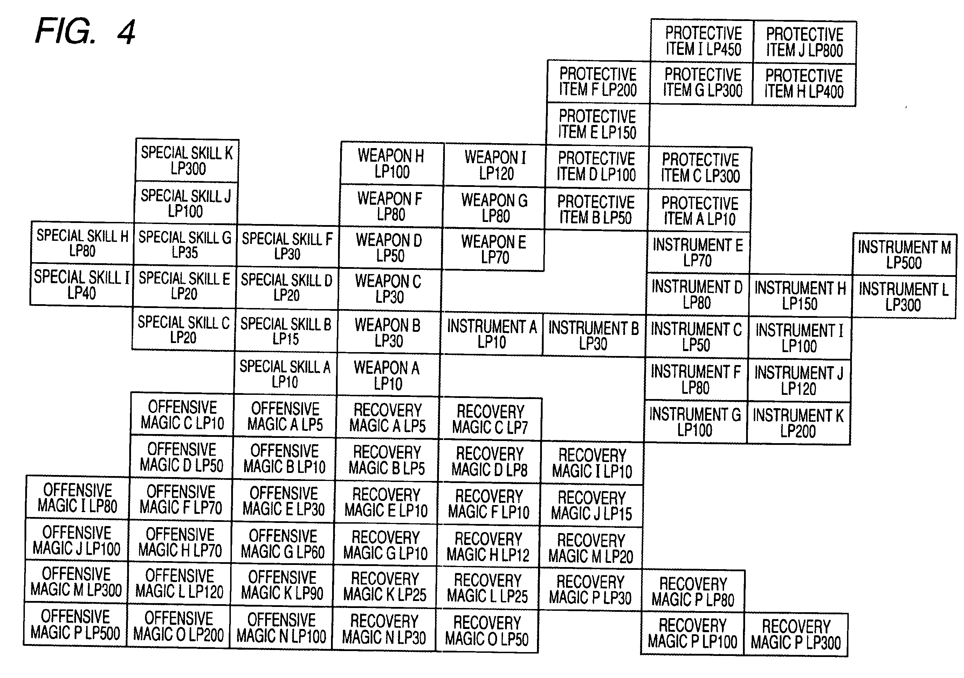

It is preferable that the objects are divided on the setting map into a plurality of areas depending on the types of abilities correlated thereto (for example, refer to a license setting basic map shown in Fig. 4, which forms a basis of an ability setting map). With such a configuration, when confirming the ability of the character, it becomes possible for a player to simply and easily ascertain the tendency of the ability of the character by viewing a distribution of objects in the setting map, to which objects the previously set abilities are correlated. Therefore, it becomes possible, when setting the character's ability, for the player to select an ability to be newly set while taking into account the tendency of the character's ability.

It is preferable that the objects arranged on the setting map are classified by color depending on the types of abilities correlated thereto. With such a configuration, when confirming the ability of the character, it becomes possible for the player to simply and easily ascertain the tendency of the ability of the character by viewing the colors of the objects in the setting map to which objects the previously set abilities are correlated. Therefore, it becomes possible, when setting the character's ability, for the player to select an ability to be newly set while taking into account the tendency of the character's ability.

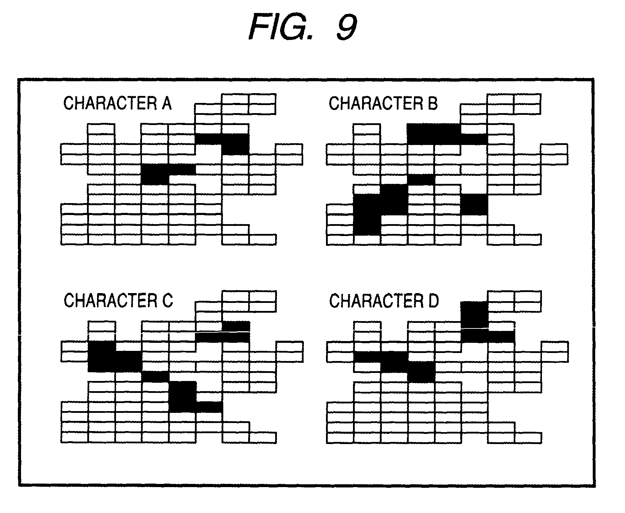

In the exemplary method, the setting map may be provided to each of a plurality of characters. The objects may be arranged on each map in a same manner (for example, refer to Fig. 9). The exemplary method may include displaying a predetermined setting map (for example, the ability setting map 501) assigned to a predetermined character (for example, a player character A) specified by an operation input by the player on the display screen (for example, step S122) . The method may further include deciding at least one object, from among the objects arranged on the predetermined setting map, to be made selectable in accordance with the operation input by the player, based upon the score acquired for the predetermined character during the progress of the video game and upon the object to which the ability previously set for the predetermined character is correlated from among the objects arranged on the predetermined setting map (for example, steps S124 and S125). The method may further include receiving a selection instruction in accordance with the operation input by the player for the object decided as being selectable on the predetermined setting map (for example, step S126). The method may further include subtracting the score correlated to the object on the predetermined setting map, which object has received the setting instruction, from the score acquired for the predetermined character during the progress of the video game (for example, step S128). The method may further include setting the ability correlated to the object that has received the setting instruction for the predetermined character (for example, step S129). With such a configuration, by comparing ability setting conditions in the setting map assigned to each character, it becomes possible for a player to simply and easily ascertain a difference in the tendency of the ability of each character.

In the method, when deciding objects that are to be made selectable in accordance with the operation inputs by the player from among the objects arranged on the predetermined setting map assigned to the predetermined character, the object to which a specified ability previously set for another character is correlated may be removed from the objects to be made selectable. With such a configuration, it is possible to ensure that the specified ability set for another character is not set for the predetermined character.

In the method, the plurality of objects arranged on the setting map may be displayed so that the object to which the ability previously set for the character is correlated, the object made selectable in accordance with the operation input by the player, and the object which has not been set for the character and is made non-selectable in accordance with the operation input by the player should be distinguished. With such a configuration, it becomes possible for the player to easily ascertain a condition of each ability correlated to each object, and also possible for the player to simply and easily carry out the setting and confirmation of the character's ability.

In the method, the object not set for the character made non-selectable in accordance with the operation input by the player or the ability correlated to such an object may be removed from among the plurality of objects. With such a configuration, it is possible not to display the ability which is non-selectable and which has not been set for the character, thereby making it possible for a player to simply and easily set and confirm the character's ability.

It is preferable that the exemplary method controls a progress of a role playing game. With such a configuration, it becomes possible for a player to simply and easily set and confirm the character's ability in the role playing game, and to enhance the player's enjoyment.

According to a second aspect of the present invention, there is provided a video game processing apparatus (for example, a video game apparatus 100, a video game apparatus main body 10) which controls a progress of a video game that displays a setting map for setting an ability of a character on a display screen in accordance with an operation input by a player during the game in progress, and sets the ability of the character based upon the operation input by the player. The apparatus includes a setting map display system (for example, a portion which executes a process of step S122 in a controller 11) that displays, on the display screen, the setting map. On the setting map are arranged a plurality of objects including objects to which basic abilities are correlated and objects to which special abilities are correlated, which abilities can be set for the character. The apparatus further includes a selectable object deciding system (for example, a portion which executes a process of steps S124 and S125 in the controller 11) that decides at least one object, from among the objects arranged on the setting map, to be made selectable in accordance with the operation input by the player, based upon a score acquired during the progress of the video game and the object to which the ability previously set is correlated from among the objects arranged on the setting map. The apparatus further includes a selection instruction receiving system (for example, a portion that executes a process of step S126 in the controller 11) that receives a selection instruction in accordance with the operation input by the player for the object decided as being selectable by the selectable object deciding system. The apparatus further includes a setting instruction receiving system (for example, a portion which executes a process of step S127 in the controller 11) that receives a setting instruction in accordance with the operation input by the player for the ability correlated to the object having received the selection instruction from the selection instruction receiving system. The apparatus further includes a score subtracting system (for example, a portion which executes a process of step S128 in the controller 11) that subtracts the score correlated to the object having received the setting instruction from the setting instruction receiving system from the score acquired during the progress of the video game. The apparatus further includes an ability setting system (for example, a portion which executes a process of step S129 in the controller 11) that sets the ability correlated to the object having received the setting instruction from the setting instruction receiving system for the character.

According to a third aspect of the present invention, there is provided a video game processing program for causing a computer to control a progress of a video game which displays a setting map for setting an ability of a character on a display screen in accordance with an operation input by a player during the game in progress, and to set the ability of the character based upon the operation input of the player. The program causes the computer (for example, the video game apparatus 100, the video game apparatus main body 10) to display the setting map on the display screen (for example, step S122). On the setting map are arranged a plurality of objects including objects to which basic abilities are correlated and objects to which special abilities are correlated, which abilities can be set for the character. The program further causes the computer to decide at least one object, from among the objects arranged on the setting map, to be made selectable in accordance with the operation input by the player, based upon a score acquired during the progress of the video game and the object to which the ability previously set is correlated from among the objects arranged on the setting map (for example, steps S124 and S125). The program further causes the computer to receive a selection instruction in accordance with the operation input by the player for the object decided as being selectable (for example, step S126). The program further causes the computer to receive a setting instruction for the ability correlated to the object which has received the selection instruction in accordance with the operation input by the player (for example, step S127). The program further causes the computer to subtract the score correlated to the object which has received the setting instruction from the score acquired during the progress of the video game (for example, step S128). The program further causes the computer to set the ability correlated to the object that has received the setting instruction for the character (for example, step S129).

According to the invention, it becomes possible for a player to more simply and easily set and confirm the character's ability, and to enhance the player's enjoyment of the video game.
Fig. 1 is a block diagram showing an example of a configuration of a video game apparatus according to an embodiment of the invention;
Fig. 2 is a flowchart showing an example of a main processing procedure;
Fig. 3 is a flowchart showing an example of a license confirmation and setting interruption processing procedure;
Fig. 4 is an explanatory diagram showing an example of a license setting basic map;
Fig. 5 is an explanatory diagram showing an example of license information;
Fig. 6 is an explanatory diagram showing an example of a license setting screen displayed on a screen display portion;
Fig. 7 is an explanatory diagram showing an example of the license setting screen displayed on the screen display portion;
Fig. 8 is an explanatory diagram showing an example of the license setting screen displayed on the screen display portion; and
Fig. 9 is an explanatory diagram showing an example of a screen showing license setting conditions for multiple player characters.

An embodiment of the present invention will be explained below in detail with reference to the drawings.

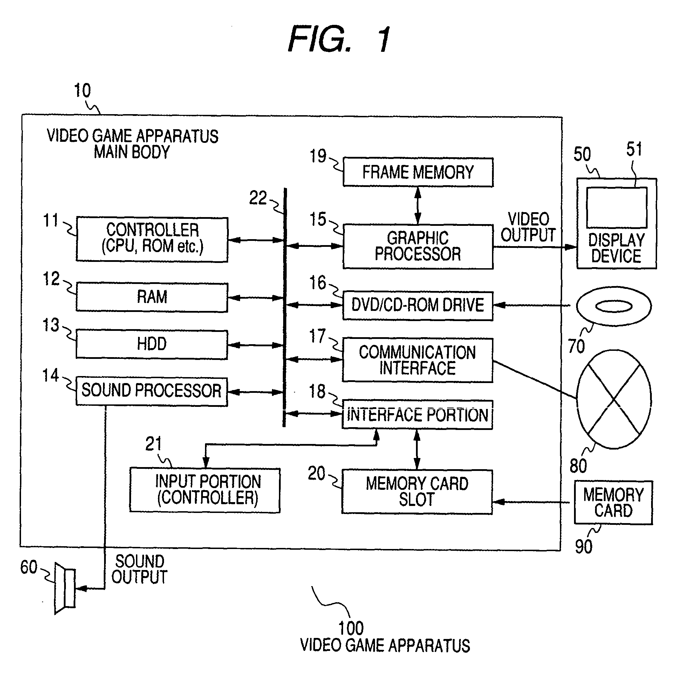

Fig. 1 is a block diagram showing an example of a configuration of a video game apparatus 100 according to the embodiment of the invention. As shown in Fig. 1, the video game apparatus 100 in the example includes a video game apparatus main body 10, a display device 50 and a sound output device 60. The video game apparatus main body 10 may be composed of, for example, a commercially available video game machine, a personal computer device, a portable telephone device, or any other device capable of carrying out an aspect of the invention as the skilled artisan will recognize without departing from the spirit and/or scope of the invention. Also, the display device 50 may be composed of, for example, a television or a liquid crystal display, and includes an image display portion 51. However, any other mechanism of conveying a perceivable image may be used instead, such as, for example, a holographic projection device, a video projector, a user-mounted display device, or the like.

The video game apparatus main body 10 includes a controller 11, a random access memory (RAM) 12, a hard disc drive (HDD) 13, a sound processor 14, a graphic processor 15, a storage device, such as, for example, a DVD/CD-ROM drive 16, a communications interface 17, an interface portion 18, a frame memory 19, a memory card slot 20 and an input portion (controller) 21.

The controller 11, the RAM 12, the hard disc drive (HDD) 13, the sound processor 14, the graphic processor 15, the DVD/CD-ROM drive 16, the communications interface 17 and the interface portion 18 are all connected to an internal bus 22.

The controller 11, including a central processing unit (CPU), a read only memory (ROM) (not shown) and the like, controls the overall operation of the video game apparatus 100 in accordance with a control program stored in the HDD 13 and a memory medium 70. The controller 11 is equipped with an internal timer used for, inter alia, generating a timer interruption signal. The RAM 12 is used as a work area of the controller 11. The HDD 13 is a memory area for storing the control program and various data.

The sound processor 14 is connected to the sound output device 60 constituted by, for example, a speaker. The sound processor 14 transmits a sound signal to the sound output device 60 in accordance with a sound output instruction from the controller 11, which is executing a process in accordance with the control program. The sound output device 60, for example, may be built into the display device 50 or the video game apparatus main body 10, or may be a separate unit that is connectable via wired or wireless communication to the video game apparatus, wherein the separate unit may be a resonating transducer that causes physical structures (such as, for example, walls, table surfaces, ceilings, or the like) to vibrate to reproduce audible sounds.

The graphic processor 15 is connected to the display device 50, which includes the image display portion 51 for displaying images. The graphic processor 15, in accordance with a graphics instruction from the controller 11, generates an image in the frame memory 19 and transmits a video signal to the display device 50 to cause an image to be displayed on the image display portion 51. An image switching time for the images displayed on the display device in response to the video signal may be, for example, set to 1/30 second per frame for NTSC or PAL-M type signals. However, the skilled artisan will readily recognize that other switching times may be used such as, for example, 1/25 second per frame for PAL or SECAM type signals, 1/60 second per frame, 1/50 second per frame, 1/15 second per frame, or any other switching time necessary to cause a moving image to be displayed on a display device that is mated to the video game apparatus 100 without departing from the spirit and/or scope of the invention.

The memory medium 70, such as, for example, a DVD-ROM or a CD-ROM, in which a game control program is stored, is loaded into the DVD/CD-ROM drive 16. The DVD/CD-ROM drive 16 reads various data such as the control program from the memory medium 70 loaded into the DVD/CD-ROM drive 16.

The communications interface 17 is connected to a communication network 80, such as, for example, the Internet, a local area network, or a wide area network, wirelessly or by wire. The video game apparatus main body 10 performs communications with, for example, another computer via the communication network 80 by using a communication function of the communications interface 17.

The input portion 21 and the memory card slot 20 are connected to the interface portion 18. The interface portion 18 stores instruction data from the input portion 21 in the RAM 12 based upon a user's operation of the input portion 21. Accordingly, the controller 11 executes various kinds of calculation processing in accordance with the instruction data stored in the RAM 12.

The input portion 21, being composed of, for example, a game machine controller, includes multiple operation buttons such as, for example, one or more direction instruction keys and various selection keys. In this embodiment, in order to keep the description simple, the player virtually moves a player character, which will be described later, by operating a single direction instruction key, and generates various commands such as, for example, battle commands or commands for setting or confirming an ability of the player character by operating the various selection keys. The player thereby causes the controller 11 to perform a predetermined processing in accordance with situations that arise during a progress of the game. The direction instruction key can also be used for moving a cursor, etc. The skilled artisan will readily recognize that the game machine controller may include any number of actuation members, including virtually selectable actuation members such as, for example, user-mounted actuation devices that use eye-tracking technology, hand movement, or other biometrics to allow a user generate desirable control signals without departing from the spirit and/or scope of the invention.

Also, the interface portion 18 carries out a processing for storing data indicating a progress condition of a game stored in the RAM 12 in a memory card 90 loaded into the memory card slot 20. The interface portion 18 also performs a processing for reading game data at a time of interruption, which data has been saved in the memory card 90, and transferring the game data to the RAM 12.

The various data, such as, for example, the control program for performing a game with the video game apparatus 100 are stored in, for example, the memory medium 70. The various data stored in the memory medium 70 are read by the DVD/CD-ROM drive 16 in which the memory medium 70 is loaded. The read-out data are loaded in the RAM 12. The controller 11 performs various processing such as, for example, transmission of the graphics command to the graphic processor 15 or a transmission of a sound output instruction to the sound processor 14 in accordance with the control program loaded in the RAM 12. While the controller 11 is performing the processing, data (for example, data showing a game score, a condition of the player character, etc.) generated intermediately in accordance with the progress condition of the game are saved in the RAM 12, which is used as a work memory.

A three-dimensional video game according to the embodiment of the invention includes a portion in which a game advances with multiple characters, including the player character (a character which acts in accordance with an operation by the player of the input portion 21), moving in a field provided in a virtual three-dimensional space. The virtual three-dimensional space in which the field is formed is shown by using a world coordinate system. The field, being constituted by multiple surfaces, is represented with coordinates of an apex of each constituent surface as a feature point.

Next, an operation of the video game apparatus 100 in the embodiment will be described.

Herein, in order to simplify the description, it is assumed that the player character and multiple non-player characters (a character that acts in accordance with a control of a game machine, specifically, a control of the controller 11) exist as objects acting in the virtual three-dimensional space. Descriptions of processes other than those particularly related to the invention have been omitted. In the embodiment, it is assumed that a video game control of a role playing game is executed.

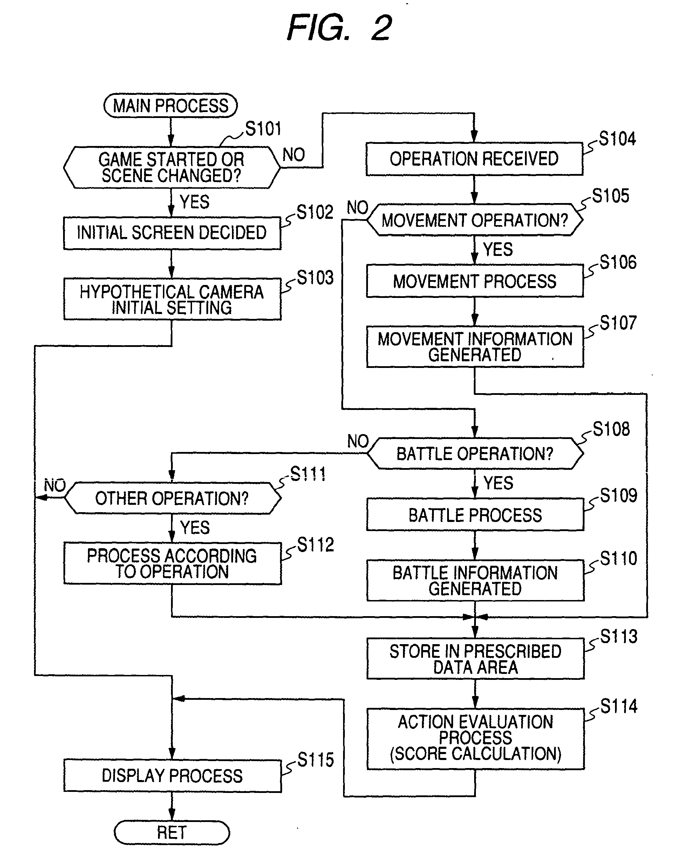

Fig. 2 is a flowchart showing an example of a main processing procedure in the video game apparatus 100 in the embodiment. The exemplary main processing procedure, being a process for generating images for one frame and for controlling the video game, is performed in response to a timer interruption every 1/30 second. The interruption rate of "1/30 second" one non-limiting example, the exemplary main processing procedure may be performed, for example, in response to a timer interruption every one field period (1/60 second), every two frame periods (1/15 second), or at different rates depending on an amount of processing and the display device that is coupled to the video game apparatus.

In the embodiment, the game advances on a common field in which various kinds of actions are taken, including a movement of the player character and a battle by the player character. A stage is completed when a predetermined target on the field is achieved, and then the game advances to a next stage on the field. Also, in the embodiment, each of the characters, which appear on the field, is assigned an identical time base. The characters, having once appeared, move or stop on the field in accordance with the identical time base for as long as the hit points (HPs) (hit points: a value expressing a life power) do not become zero. A portion displayed on the image display portion 51 as a character image is a portion existing within a visual range of a virtual camera in the field.

In the exemplary main processing procedure, the controller 11 determines, in the case where the game has not started, whether there has been a game start instruction by a user's operation of the input portion 21. The controller determines, in the case where the game is in progress, whether it is time to change a scene (for example, changing a field) (step S101). The time to change the scene includes, for example, a time at which a switch is made to display a virtual three-dimensional space showing a new scene on the image display portion 51 after finishing the display of a scene being displayed thus far on the image display portion 51. The scene being displayed thus far includes, for example, a scene being displayed by the virtual three-dimensional space, a scene being displayed with a moving image effect by moving images, etc.

When it is determined that there has been a game start instruction, or that it is time to change the displayed scene ("Yes" in step S101), the controller 11 decides an initial screen (an initial screen at a game start time or an initial screen at a scene change time) that is to be displayed in accordance with the control program (step S102). The various data for a screen, a character and the like used in the game are stored in the memory medium 70. In step S102, an initial display position for a player character and one or more non-player characters (NPCs) to be displayed on the initial screen or a scene after a scene change (for example, a new stage) are decided in accordance with the control program.

Next, the controller 11 decides, in accordance with the control program, a position of a view point of the virtual camera, a direction of a visual axis and a size of a visual angle, and carries out an initial setting for the virtual camera in order to carry out a perspective transformation (step S103). Then, the procedure progresses to step S115.

When it is determined that it is not time to change the displayed scene while the game is in progress ("No" in step S101), the controller 11 receives instruction data based upon an operation by the player of the input portion 21 (step S104). That is, the controller 11 determines whether instruction data for causing an execution of an action by the player character has been input from the input portion 21. When it is determined that valid instruction data (i.e., instruction data for which a reception is allowed, described in greater detail later) has been input, the controller 11 receives the instruction data.

In the event that the instruction data (movement instruction data: a movement command or a movement instruction via the direction instruction key) for instructing an action related to a movement is received in step S104, in response to an operation of the input portion 21 (a movement operation) for instructing an action of the player character related to a movement ("Yes" in step S105), the controller 11 performs a movement processing in accordance with the movement instruction data received (step S106), otherwise the processing progresses to step S108 ("No" in step S105) . In the movement processing, the controller 11 moves a position of the player character in a virtual space (on a current field) in accordance with the movement instruction data received. The movement command includes, for example, a dash instruction command. The dash instruction command, which is a command to move the player character quickly, serves as a command for giving an instruction for quickly leaving (escaping from) a battle area when a battle is in progress.

Next, the controller 11 generates movement information based upon position information of the player character derived from the movement process (step S107). For example, in response to a movement of the player character's position resulting from the movement processing, the controller 11 changes the setting of the virtual camera by updating the position of the view point of the virtual camera, the direction of the visual axis, and the size of the visual angle on an as needed basis. The movement information includes various kinds of information related to the movement, such as, for example, a position of the player character after the movement, the position of the view point of the virtual camera, the direction of the visual axis, and the size of the visual angle changed by the movement of the player character. Then, the processing progresses to step S113.

When the controller 11 receives instruction data (battle instruction data: a battle command) for instructing an action related to a battle ("No" in step S105, "Yes" in step S108) in response to an operation of the input portion 21 (a battle operation) for instructing an action of the player character related to a battle at step S104, the controller 11 performs a battle process in accordance with the battle instruction data received (step S109). In the battle process, the controller 11, for example, performs a processing for deciding a result and progress of a battle between an enemy character, which is a battle opponent of the player character, and the player character.

Next, the controller 11 generates battle information based on the result and progress of the battle decided by the battle process (step S110). That is, in response to the result and progress of the battle resulting from the battle process, the controller 11 updates and sets information needed from among a name of the player character, an enemy character who fought the player character, a progress of a fight, a result of the fight, a parameter for defining the ability of the player character, and so on. The battle information includes various kinds of information related to the battle, such as, for example the name of the player character, the enemy character who fought the player character, the progress of the fight, the result of the fight, and the parameter for defining the ability of the player character. Then, the process procedure progresses to step S113.

When the controller 11 receives instruction data (other instruction data: another command) for another instruction at step S104 in response to an operation of the input portion 21 (another operation) for carrying out another instruction ("No" in step S105, "No" in step S108, "Yes" in step S111), the controller 11 performs a processing (such as, for example, a conversation, a purchase, a find, etc.) in accordance with the other instruction data received (step S112), otherwise the process procedure progresses to step S115 ("No" in step S111). Then, other collective information corresponding to the processing result of step S112 is generated, and the process proceeds to step S113.

In step S113, the controller 11 updates a current position of the player character by storing the movement information generated in step S107 in a predetermined data area of the RAM 12. Also, in step S113, the controller 11 stores and retains various kinds of action history information for the player character by storing the battle information generated in step S110 and the other collective information generated after step S112 in a predetermined data area of the RAM 12.

Next, the controller 11 performs an action evaluation process based on information indicating the action history of the player character temporarily stored in the RAM 12 (step S114). Specifically, information for which digitalization is necessary is digitalized using a previously prepared conversion table. Also, information for which weighting is necessary is multiplied by a predetermined coefficient, and the resulting values are added together to calculate specific information. Then, the calculated specific information is added to an old score stored in the predetermined data area of the RAM 12 and the resulting score is stored in the prescribed data area. Thus, a score serving as evaluation information is updated.

Then, the controller 11 performs a perspective transformation of the virtual three-dimensional space, including the player character and one or more non-player characters to be displayed from the virtual camera on a virtual screen, in accordance with the setting and the like of the virtual camera, and carries out a display processing for generating a two-dimensional image to be displayed on the image display portion 51 (step S115). When the display processing ends, the main processing procedure ends. After that, when a timer interruption is generated at a start time of a next frame period, the main processing procedure is again performed. Then, as the main processing procedures are repeatedly executed, the character image is switched at every frame period, thereby causing a moving image to be displayed on the image display portion 51.

A simple description will be given of the display process at step S115. At step S115, the controller 11 converts at least coordinates of apexes of a polygon included in a range perspective-transformed on the virtual screen from among coordinates of apexes of polygons constituting the virtual three-dimensional space that includes the player character and the non-player character, from coordinates of the world coordinate system to coordinates of a perspective coordinate system. Next, the controller 11 sends coordinates of an apex of a polygon in the perspective coordinate system with respect to the player character and the non-player character to the graphic processor 15, thereby transmitting a graphics command to the graphic processor 15.

When the graphics command is input, the graphic processor 15 updates contents of a Z buffer in such a way that data of a nearest point from a view point of the virtual camera should remain based upon the coordinates of the perspective coordinate system with respect to respective points constituting respective surfaces. When the details of the z buffer are updated, the graphic processor 15 transfers image data for remaining points in the front side to the frame memory 19. Also, the graphic processor 15 performs a shading, a texture mapping and the like on the transferred image data.

Then, the graphic processor 15 sequentially reads the image data transferred to the frame memory 19, adds at least one synchronization signal thereto, generates a video signal, and transmits the generated signal to the display device 50. The display device 50 displays an image corresponding to the video signal transmitted from the graphic processor 15 on the image display portion 51. As the image on the image display portion 51 is switched every frame period (after each frame), the player can see an image, including the player character and the non-player character, moving on the field.

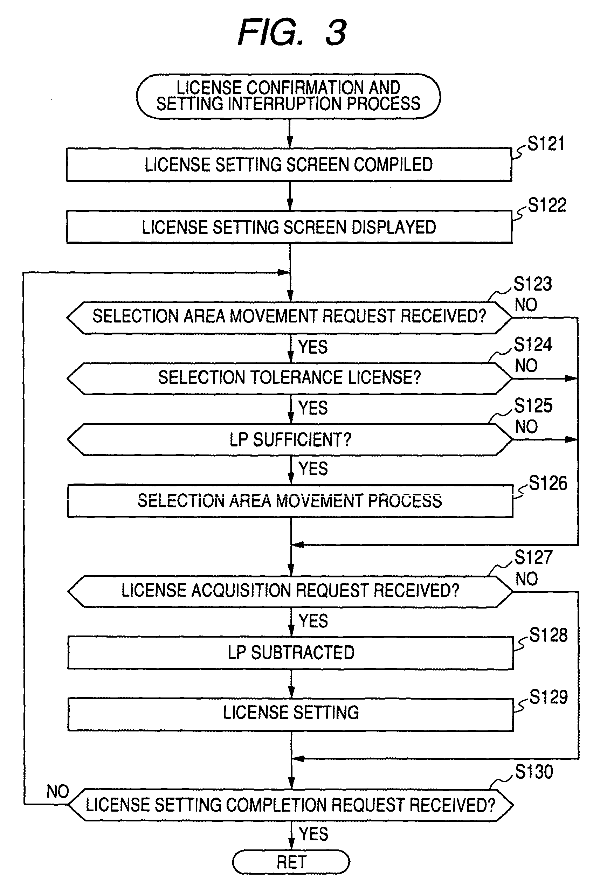

Next, a license confirmation and setting interruption process in the video game apparatus 100 of the embodiment will be described. Fig. 3 is a flowchart showing an example of the license confirmation and setting interruption process in the video game apparatus 100 according to an embodiment of the invention. The license confirmation and setting interruption process includes a process in which the controller 11, in response to the player's operation of the input portion 21, displays a screen for confirming a license setting condition of each player character, and a process in which the controller 11 sets a predetermined license for each player character. The license confirmation and setting interruption process is executed by interrupting the main processing procedure described heretofore in response to a predetermined operation (an instruction operation for performing a license setting) by the player of the input portion 21. Herein, a description will be given of an example of confirming the license setting condition of a player character A and setting the license of the player character A.

The license will be explained. The license includes various kinds of abilities (such as, for example, basic abilities and special abilities) related to a battle that may be set for a player character in accordance with predetermined conditions. Specifically, abilities that may be set as the license for the player character include, for example, a usage ability of various kinds of weapons, a usage ability of various kinds of protective items, an execution ability of various kinds of offensive magic, an execution ability of various kinds of defensive magic, an execution ability of various kinds of recovery magic, a usage ability of various kinds of instruments, and an execution ability of various kinds of special techniques. A player character for which a certain license has been set acquires an ability indicated by the license. For example, a character that has acquired an ability to use a certain weapon becomes able to wear and use the weapon. Also, for example, a character which has acquired an ability to use a certain protective item becomes able to wear and use the protective item.

In the license confirmation and setting interruption process, the controller 11 generates a license setting screen for the player character A designated by a predetermined operation by the player of the input portion 21 (step S121), and displays the generated license setting screen on the image display portion 51 of the display device 50 (step S122).

The license setting screen, being a screen for setting a license for each player character, is prepared, for example, for every player character. In the exemplary embodiment, at step S121, based on a predetermined operation (an operation designating the player character A) by the player of the input portion 21, a license setting screen showing a current license setting condition of the player character A is generated, and the generated license setting screen of the player character A is displayed on the image display portion 51 at step S122.

In the exemplary embodiment, the controller 11, at step S121, generates the license setting screen based upon a license setting basic map, which is prepared in advance, and license information showing a license setting condition of each player character. A license setting screen that is generated or updated in a previous license confirmation and setting interruption process and stored in, for example, the RAM 12, may be read from the RAM 12 at step S121 of the present license confirmation and setting interruption process.

Fig. 4 is an explanatory diagram showing an example of the license setting basic map. License setting basic map data showing the license setting basic map is generated in advance, and stored in the memory medium 70. The license setting basic map, as shown in Fig. 4, is formed with multiple objects randomly arranged in vertical and horizontal directions and is formed into an arbitrary shape. In the disclosed embodiment, squares are used for the objects, however, any other perceivable object may be used, including, but not limited to, for example, circles, triangles, rectangles, or any other type of perceivable object capable of conveying license identification information. In the description provided below, "square" and "object", as well as "squares" and "objects", are used interchangeably. Any one of the licenses to be set for each player character is associated in advance with each of the objects forming the license setting basic map. Also, as shown in Fig. 4, license identification information for identifying the associated license and license points (LP) necessary for setting the associated license are displayed in each of the objects as license related information corresponding to the associated license.

In the example, the license identification information is displayed as a combination of a type of license and a reference code for distinguishing a license within that type. The license identification information may be a license name specified by a concrete weapon or protective item name. Also, the license identification information may be represented by, for example, a shape and the like for identifying the license, rather than being represented by characters as in the exemplary embodiment.

The license points (LP) are assigned to each of the player characters by fulfilling a predetermined condition in the game, and represent points used in exchange for the setting of the license for each player character, as will be described later at greater length. For example, when an enemy character is defeated, the license points are given to the player character that defeated the enemy character, or to each of the player characters taking part in the battle. The value of license points acquired by the player character may differ depending on strengths and the like of the defeated enemy character.

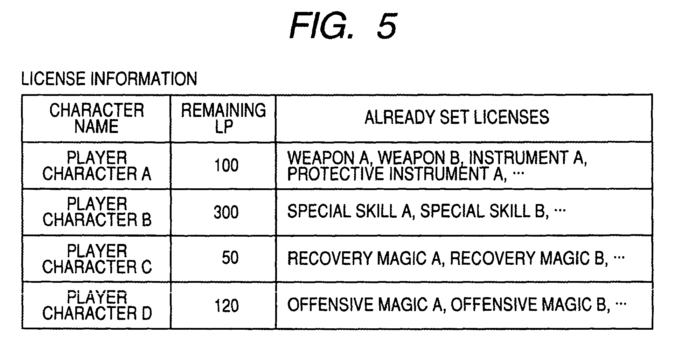

Fig. 5 is an explanatory diagram showing an example of license information. As shown in Fig. 5, the license information includes currently remaining LPs and obtained licenses indicating the licenses previously set for each of player characters A to D. The license information, being stored in, for example, the RAM 12, is updated each time the licenses are set and each time the LPs are changed.

Fig. 6 is an explanatory diagram showing an example of the license setting screen generated at step S121 and displayed at step S122. As shown in Fig. 6, an ability setting map 501, a selected license display area 502 displaying license identification information of a license associated with an object in which the cursor is positioned, a selected license accompanying information display area 503 displaying accompanying information related to the license corresponding to the square in which the cursor is positioned, a player notification information display area 504 in which information such as an instruction or a question to be announced to the player is displayed, and a remaining LP display area 505 displaying an LP value possessed by a relevant player character, are provided on the license setting screen.

As shown in Fig. 6, the ability setting map 501 is configured of objects, such as, for example, squares, formed in the same way as those in the license setting basic map. Also, as shown in Fig. 6, in the exemplary embodiment, license related information relating to the licenses previously set for the player character A, and license related information relating to license fulfilling selection allowance conditions, to be described hereafter, are displayed in the corresponding squares in the ability setting map 501. However, in the example, the license related information relating to information that has not been set for the player character A and not fulfilling the selection allowance conditions to be described hereafter, is not displayed in corresponding squares, and those squares are left empty.

In the exemplary embodiment, the selection allowance conditions are to be licenses associated with the squares neighboring one or more square associated with the previously set license to a right or left, or above or below, from among all the licenses arranged on the license setting basic map. For example, the license of a square neighboring a square in which the obtained license is displayed can be selected, while other licenses cannot be selected. Any kind of selection allowance condition may be acceptable as long as it is def ined by whether the license can be selected based upon its position in relation to the square associated with the previously set license. It is acceptable, for example, that the allowance condition may include a license associated with the square neighboring the square associated with the previously set license to the left or below.

The exemplary ability setting map 501 is configured such that a plurality of squares are arranged in respective fields divided according to the kinds of associated abilities for a player character. For example, each of the displayed abilities are classified and arranged on the ability setting map 501 according to the kind of ability. Specifically, for example, the offensive magic ability is displayed grouped in a bottom left area, while the protective items are displayed grouped in a top right area.

Also, in the exemplary embodiment, with regard to the plurality of squares arranged on the ability setting map 501, a square with which the ability previously set for the character is associated (a square surrounded by a heavy line in Fig. 6), a square made selectable by a player's operation of the input portion 21 (a square in Fig. 6 in which the license identification information is displayed, and LP less than or equal to the character's remaining LP are displayed), and a square which is not set for the character and made non-selectable by the player's operation of the input portion 21 (in Fig. 6, a square in which the license identification information is not displayed, and a square in which LP greater than the character's remaining LP are displayed), are identifiably displayed.

In the embodiment, respective licenses are arranged on the license setting basic map and the ability setting map in such a way that a license of a basic ability of a comparatively low level in the game becomes selectable at an early stage of the game, while a license of a special ability of a comparatively high level in the game becomes selectable at a late stage of the game (a stage at which the game has progressed to a certain extent) by providing a selection restriction by the selection allowance conditions described above and the ability setting map 501 formed by the plurality of squares.

When the license setting screen is displayed, the controller 11, in response the player's operation of the input portion 21 on the license setting screen, executes processes of steps S123 to S130 (Fig. 3) described hereafter.

Specifically, the controller 11 receives a selection area movement request, which is a request for a movement of the cursor to select a license in accordance with an operation of the input portion 21 ("Yes" in step S123), otherwise the license confirmation and setting interruption process proceeds to step S127 ("No" in step S123). Then, the controller 11 determines whether the license associated with a destination object indicated by the movement request is a license fulfilling the selection allowance conditions (step S124). If it is a license fulfilling the selection allowance conditions ("Yes" in step S124), then the controller determines whether there are sufficient LPs to set the license associated with the destination square indicated by the movement request (step S125), otherwise the process proceeds to step S127 ("No" in step S124).

In step S125, it is determined whether the LPs acquired and possessed by the player character A are equal to or greater than the LP needed to set the license associated with the destination object indicated by the movement request.

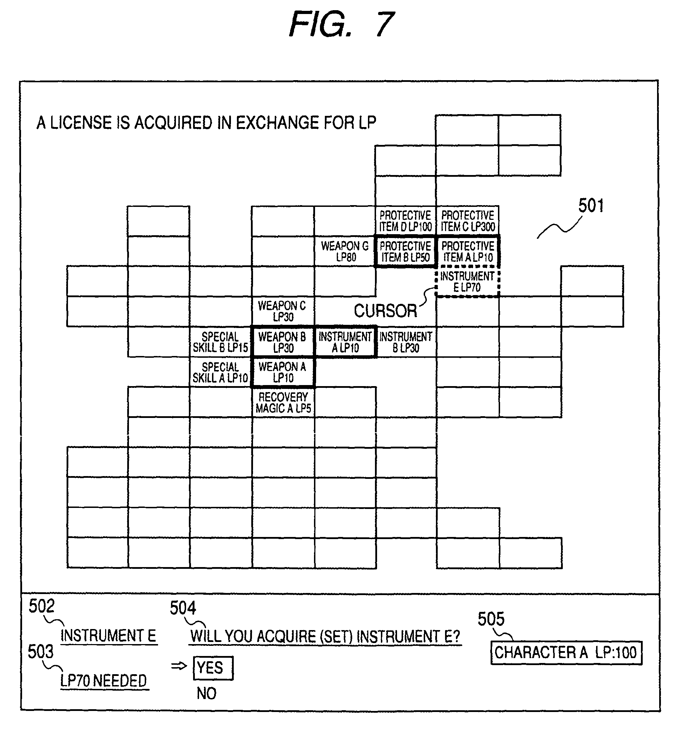

In the event that the license fulfills the selection allowance conditions ("Yes" in step S125), and that there are sufficient LP, the controller 11 carries out a selection area movement process which moves the cursor to the object requested by the selection area movement request (step S126), otherwise the process proceeds to step S127 ("No" in step S125)*.* When the selection area movement process is executed, for example, the license setting screen is updated from a condition shown in Fig. 6 to a condition shown in Fig. 7. That is, as shown in Fig. 7, the cursor is moved to the destination requested by the movement request. The license identification information for the license associated with the object in which the cursor is positioned after the movement is displayed in the selected license display area 502. The LP value needed to set the license is displayed in the selected license accompanying information display area 503 as the accompanying information related to the license associated with the object in which the cursor is positioned after the movement. A question and options regarding whether to set the license associated with the object in which the cursor is positioned after the movement are displayed in the player notification information display area 504.

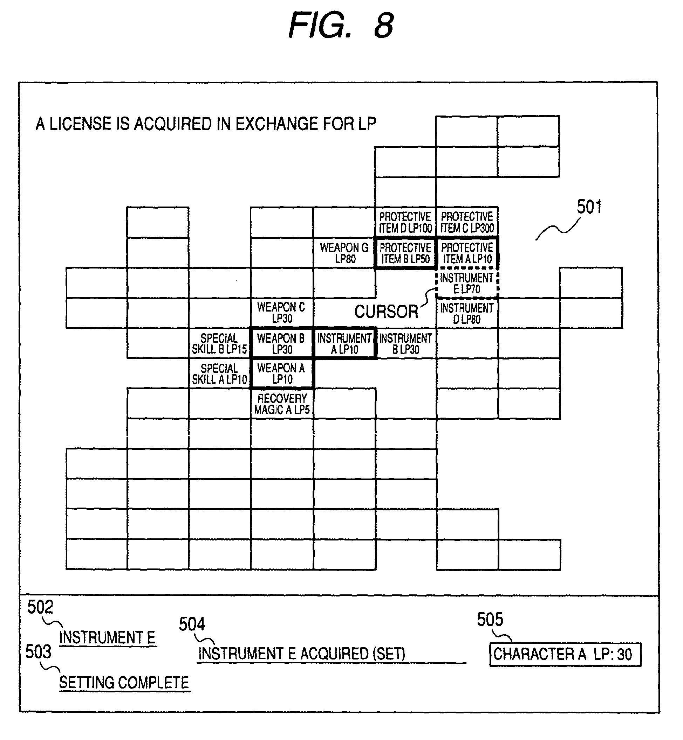

On receiving a license acquisition request based on an operation of the input portion 21 ("Yes" in step S127), the controller 11 subtracts the LP needed to set the selected license from the remaining LP acquired and possessed by the player character A (step S128), and sets the selected license for the player character A (step S129), otherwise the license confirmation and setting interruption process proceeds to step S130 ("No" in step S217). When the license selected by the cursor is set for player character A, for example, the license setting screen is updated from the condition shown in Fig. 7 to a condition shown in Fig. 8. That is, as shown in Fig. 8, the cursor is moved to the destination object indicated by the movement request. Furthermore, the license identification information for a license associated with the object in which the cursor is positioned after the movement is displayed in the selected license display area 502. A message "acquisition complete", indicating that the license has been obtained, is displayed in the selected license accompanying information display area 503 as the accompanying information related to the license associated with the object in which the cursor is positioned after the movement. A message "setting complete" is displayed in the player notification information display area 504 to notify the player of the fact that the license associated with the object in which the cursor is positioned has been set. In this way, the license selected by the user's operation of the input portion 21 is set in exchange for the LPs needed to set the license.

On receiving a license setting completion request when a license setting completion button, which is not shown in the figure, is actuated by the player ("Yes" in step S130), the controller 11 finishes the process for confirming the setting condition of the license and setting the new license, otherwise the process returns to step S123 ("No" in step S130).

As heretofore described, in the exemplary embodiment, a configuration is provided as follows. That is, the ability setting map, on which a plurality of objects are arranged, including objects with which a basic ability to be set for a character and objects with which a special ability is associated for the character, and displayed on the display screen. An object that is to be made selectable by a player's operation of the input portion 21 is determined from among the objects arranged on the ability setting map based upon the acquired LPs and the objects arranged on the ability setting map with which previously set abilities are associated. A setting instruction is received for an ability associated with a object which has received a selection instruction for the object decided as selectable. The LPs associated with the object that has received the setting instruction is subtracted from the acquired LPs; and the ability associated with the object that has received the setting instruction is set for the character. Consequently, the setting and confirmation of the character's ability becomes simpler and easier to do, and it becomes possible to enhance a players' enjoyment of the video game.

That is, the configuration is such that a character's ability is set by displaying the ability setting map, on which are arranged objects to which the character's basic ability is assigned and objects to which the character's special ability is assigned, on the display screen, and receiving the selection instruction and the setting instruction of the objects arranged on the ability setting map. Consequently, the setting and confirmation of the character's ability becomes simpler and easier to do, and it becomes possible to enhance players' enjoyment of the video game.

Also, in the embodiment described heretofore, the configuration is such that the ability setting map (for example, the ability setting map generated based on the license setting basic map shown in Fig. 4), on which the plurality of objects are arranged in respective fields divided according to the kinds of associated abilities, is displayed. Consequently, it becomes possible, when confirming the character's ability, to simply and easily ascertain a tendency of the character's ability from a distribution on the ability setting map of the objects with which previously set abilities are associated. Therefore, it becomes possible for a player, when setting the character's ability, to select an ability to be newly set while taking into account the tendency of the character's ability.

Also, in the embodiment described heretofore, the plurality of objects are identifiably displayed as objects with which the abilities previously set for the character are associated, objects made selectable by the player's operation of the input portion 21, and objects which are not set for the character and being made non-selectable by the player's operation of the input portion 21. Consequently, it becomes possible for a player to easily ascertain the abilities associated with respective objects, and possible to simply and easily carry out the setting and confirmation of the character's ability.

Also, in the embodiment described heretofore, the configuration is such that the ability setting map is displayed after removing (not displaying) the abilities that have been made non-selectable by the player's operation of the input portion 21 and that have not been set for the relevant player character. Consequently, it is possible not to display the ability which is non-selectable by a player and which has not been set for the character, thereby making it possible for the player to simply and easily carry out the setting and confirmation of the character's ability. The object associated with the abilities that have been made non-selectable by the player's operation of the input portion 21 and that have not been set for the relevant player character may not be displayed. That is, the process may be configured in such a way that the objects constituting the ability setting map increase each time the license is set.

Also, in the embodiment described heretofore, the configuration is such that the ability setting map, on which multiple objects are arranged in a same way, is assigned to each of the characters. Consequently, as shown, for example, in Fig. 9, by displaying the ability setting map showing the ability setting condition of each of the characters, it becomes possible to simply and easily compare the ability setting conditions in the setting map assigned to each of the characters. Furthermore, by comparing a difference in distribution of the abilities set for each of the characters, it becomes possible to simply and easily ascertain a difference in the tendency of the ability of each of the characters. Furthermore, as shown in the example in Fig. 9, by identifiably displaying the kinds of abilities, such as by using a different color for each of the kinds of abilities, it becomes possible for a player to simply and easily ascertain the difference in the tendency of the ability of each of the characters by simply noting a color of the ability set for each player, as well as the difference in distribution of the abilities set for each character.

Although not particularly referred to in the embodiment described heretofore, the objects arranged on the ability setting map may be distinguished by color depending on the kinds of abilities associated therewith. With such a configuration, when confirming the ability of the character, it becomes possible to simply and easily ascertain the tendency of the ability of the character by a color of the object in the setting map with which a previously set ability is associated. Therefore, it becomes possible, when setting the character's ability, to select an ability to be newly set while taking into account the tendency of the character's ability.

Also, although not particularly referred to in the embodiment described heretofore, when deciding objects to be made selectable by the player's operations of the input portion 21, an object with which a specified ability previously set for another character is associated with may be removed from the objects to be made selectable. With such a configuration, it is possible to ensure that the specified ability set for another character is not set for the prescribed character. That is, for example, it is possible, in the game, to define a specified ability (for example, an execution ability of a highest level of magic, a usage ability of a highest level of a weapon, etc.) which can be set only for one optional character from among the plurality of player characters.

Also, in the embodiment described heretofore, the game proceeds on a common field in which various kinds of actions are allowed, including movement of a player character and a battle by the player character. However, it is also possible that a battlefield on which the battle takes place, and a movement field on which the movement of the player character takes place, are provided separately. In this case, depending on setting details of gambits (such as, for example, actions that are preset by a player to be automatically carried out by a player character when predetermined conditions are met during a progress of a video game), it becomes possible to cause the player character to perform an action desired by the player on the battlefield, without the player performing any operation of the input portion 21.

Also, in the embodiment described heretofore, the video game apparatus main body 10 and the display device 50 are separate entities. However, the display device 50 may be installed in the video game apparatus main body 10.

Also, in the embodiment described heretofore, a description has been given of the control of an RPG. However, the exemplary control process described herein can be effectively applied to other kinds of games, without departing from the spirit and/or scope of the invention.

Also, in the embodiment described heretofore, a description has been given with the video game apparatus 100 as an exemplary video game machine for carrying out an aspect of the invention. However, any instrument equipped with an image generating function may be used. According to an aspect of the invention, it is possible to apply the invention to various kinds of instruments, such as a personal computer, a cellular telephone terminal or a portable game machine. In the event that it is applied to the portable game machine, etc., it is preferable that a compact memory medium, such as a semi-conductor memory card, is used as the memory medium 70 in place of the CD-ROM and DVD-ROM.

Also, in the embodiment described heretofore, game data (various data for the control program, etc. used in the game) for executing the various processes in the video game apparatus main body 10 are stored in the memory medium 70. However, the game data may be distributed by a server device such as a world wide web server. In this case, it is preferable that the video game apparatus main body 10 acquires the game data distributed by the server device via the communication network 80, stores the data in the HDD 13, loads the game data from the HDD 13 to the RAM 12, and uses the data. Although game data has been employed in the example described heretofore, any data may be employed which includes at least a control program for causing a computer to execute an image generating process in the embodiment described heretofore.

The present invention is useful for application in a video game apparatus, a personal computer, a cellular telephone terminal, a portable game machine or the like which controls a progress of a video game for displaying a setting map for setting an ability of a character on a display screen in accordance with a player's operation input during a game in progress, and sets the ability of the character based on the player's operation input.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope and spirit of the disclosure. Additionally, the illustrations are merely representational and are not be drawn to scale. Certain proportions within the illustrations may be exaggerated, while other proportions may be minimized. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

An Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

The above disclosed subject matter is to be considered illustrative, and not restrictive, and the appended claims are intended to cover all such modifications, enhancements, and other embodiments that fall within the true spirit and scope of the present disclosure. Thus, to the maximum extent allowed by law, the scope of the invention is to be determined by the broadest permissible interpretation of the following claims and their equivalents, and shall not be restricted or limited by the foregoing detailed description.

Although several exemplary embodiments have been described, it is understood that the words that have been used are words of description and illustration, rather than words of limitation. Changes may be made within the purview of the appended claims, as presently stated and as amended, without departing from the scope and spirit of the invention in its aspects. Although the description refers to particular means, materials and embodiments, the invention is not intended to be limited to the particulars disclosed, but rather extends to all functionally equivalent structures, methods, and uses such as are within the scope of the appended claims.

## Claims

1. A video game processing method for controlling a progress of a video game that displays a setting map that sets an ability of a character in accordance with an operation input by a player during a progress of the video game, and for setting the ability of the character based upon the operation input by the player, the method comprising:
displaying the setting map, the setting map comprising a plurality of objects to which abilities can be set for the character, including a first object to which at least one basic ability is correlated and a second object to which at least one special ability is correlated;
deciding at least one selectable object, from among the plurality of objects of the setting map, to be made selectable in accordance with an operation input by the player, the deciding being based upon a score acquired during the progress of the video game and an object to which an ability previously set for the character is correlated;
receiving a selection instruction in accordance with the operation input by the player for the selectable object decided as being selectable;
receiving a setting instruction for an ability correlated to the selectable object which has received the selection instruction in accordance with the operation input by the player;
subtracting a score correlated to the selectable object which has received the setting instruction from the score acquired during the progress of the video game; and
setting the ability correlated to the selectable object which has received the setting instruction for the character.

2. The video game processing method according to claim 1, wherein the plurality of objects are divided on the setting map in a plurality of areas depending on types of abilities correlated to the plurality of objects.

3. The video game processing method according to claim 1 or 2, wherein the plurality of objects of the setting map are classified by color depending on the types of abilities correlated to the plurality of objects.

4. The video game processing method according to any one of claims 1 to 3, wherein the setting map is assigned to each of a plurality of characters, the plurality of objects being arranged in a same manner on the setting map assigned to each of the plurality of characters, the method further comprising:
displaying a predetermined setting map assigned to a predetermined character specified by an operation input by the player;
deciding at least one selectable object, from among the plurality of objects arranged on the predetermined setting map, to be made selectable in accordance with the operation input by the player, based upon a score acquired for the predetermined character during the progress of the video game and upon an object to which an ability previously set for the predetermined character is correlated;
receiving a selection instruction in accordance with the operation input by the player for the selectable object decided as being selectable on the predetermined setting map;
receiving a setting instruction for an ability correlated to the selectable object on the predetermined setting map, which selectable object has received the selection instruction in accordance with the operation input by the player;
subtracting a score correlated to the selectable object on the predetermined setting map, which selectable object having received the setting instruction, from the score acquired for the predetermined character during the progress of the video game; and
setting the ability correlated to the selectable object which has received the setting instruction for the predetermined character.

5. The video game processing method according to claim 4, wherein, when deciding at least one selectable object to be made selectable in accordance with the operation input by the player from among the plurality of objects arranged on the predetermined setting map assigned to the predetermined character, a selectable object to which a specified ability has previously been set for another character is removed from the plurality of objects to be made selectable.

6. The video game processing method according to any one of claims 1 to 5, wherein the plurality of objects of the setting map are displayed so that the object to which the ability has previously been set for the character is correlated, the selectable object made selectable in accordance with the operation input by the player, and a selectable object which has not been set for the character and is made non-selectable in accordance with the operation input by the player are distinguishable.

7. The video game processing method according to any one of claims 1 to 6, wherein a selectable object, which is not set for the character and is made non-selectable in accordance with an operation input by the player or an ability correlated to the selectable object from among the plurality of objects, is removed.

8. The video game processing method according to any one of claims 1 to 7, wherein the video game is a role playing game.

9. A video game processing apparatus that controls a progress of a video game that displays a setting map for setting an ability of a character in accordance with an operation input by a player during a progress of the video game, and sets the ability of the character based upon the operation input by the player, the apparatus comprising:
a setting map display system that displays the setting map, the setting map comprising a plurality of objects to which abilities can be set for the character, including at least one object to which at least one basic ability is correlated and at least one object to which at least one special ability is correlated;
a selectable object deciding system that decides at least one selectable object, from among the plurality of objects of the setting map, to be made selectable in accordance with the operation input by the player, based upon a score acquired during the progress of the video game and an object to which an ability previously set for the character;
a selection instruction receiving system that receives a selection instruction in accordance with the operation input by the player for the selectable object decided as being selectable by the selectable object deciding system;
a setting instruction receiving system that receives a setting instruction in accordance with the operation input by the player for an ability correlated to the selectable object having received the selection instruction from the selection instruction receiving system;
a score subtracting system that subtracts a score correlated to the selectable object having received the setting instruction from the setting instruction receiving system from the score acquired during the progress of the video game; and
an ability setting system that sets the ability correlated to the selectable object having received the setting instruction from the setting instruction receiving system for the character.

10. The video game processing apparatus according to claim 9, wherein the setting map display system displays the setting map on which the plurality of objects are divided in a plurality of areas depending on types of abilities correlated to the plurality of objects.

11. The video game processing apparatus according to claim 9 or 10, wherein the setting map display system displays the setting map on which the plurality of objects are classified by color depending on the types of abilities correlated to the objects.

12. The video game processing apparatus according to any one of claims 9 to 11, wherein
the setting map is assigned to each of a plurality of characters, the plurality of objects being arranged in a same manner on the setting map assigned to each of the plurality of characters;
the setting map display system displays a predetermined setting map assigned to a predetermined character specified by an operation input by the player;
the selectable object deciding system decides the selectable object, from among a plurality of objects arranged on the predetermined setting map, to be made selectable in accordance with the operation input by the player, based upon a score acquired for the predetermined character during the progress of the video game and upon an object to which an ability previously set for the predetermined character is correlated;
the selection instruction receiving system receives a selection instruction in accordance with the operation input by the player for the selectable object decided as being selectable by the selectable object deciding system on the predetermined setting map;
the setting instruction receiving system receives a setting instruction in accordance with the operation input by the player for an ability correlated to the selectable object on the predetermined setting map, the selectable object having received the selection instruction from the selection instruction receiving system;
the score subtracting system subtracts a score correlated to the selectable object on the predetermined setting map, which selectable object having received the setting instruction from the setting instruction receiving system, from the score acquired for the predetermined character during the progress of the video game; and
the ability setting system sets the ability correlated to the selectable object having received the setting instruction from the setting instruction receiving system for the predetermined character.

13. The video game processing apparatus according to claim 12, wherein the selectable object deciding system, when deciding at least one selectable object to be made selectable in accordance with the operation input by the player from among the plurality of objects arranged on the predetermined setting map assigned to the predetermined character, removes a selectable object to which a specified ability has previously been set for another character from the plurality of objects to be made selectable.

14. The video game processing apparatus according to any one of claims 9 to 13, wherein the plurality of objects of the setting map are displayed so that the object to which the ability has previously been set for the character is correlated, the selectable object made selectable in accordance with the operation input by the player, and a selectable object which has not been set for the character and is made non-selectable in accordance with the operation input by the player are distinguishable.

15. The video game processing apparatus according to any one of claims 9 to 14, wherein the setting map display system displays the setting map on which the selectable object, which is not set for the character and is made non-sexectable in accordance with an operation input by the player or an ability correlated to said selectable object from the plurality of objects, is removed.

16. The video game processing apparatus according to any one of claims 9 to 15, wherein the video game is a role playing game.

17. A video game processing program embodied in a computer readable medium for causing a computer to control a progress of a video game that displays a setting map for setting an ability of a character in accordance with an operation input by a player during the progress of the video game, and to set the ability of the character based upon the operation input of the player, the program causing the computer to execute:
displaying the setting map, the setting map comprising a plurality of objects to which abilities can be set for the character, including at least one object to which at least one basic ability is correlated and at least one object to which at least one special ability is correlated;
deciding at least one selectable object, from among the plurality of objects of the setting map, to be made selectable in accordance with the operation input by the player, based upon a score acquired during the progress of the video game and the an object to which an ability previously set for the character is correlated
receiving a selection instruction in accordance with the operation input by the player for the selectable object decided as being selectable;
receiving a setting instruction for an ability correlated to the selectable object which has received the selection instruction in accordance with the operation input by the player;
subtracting a score correlated to the selectable object which has received the setting instruction from the score acquired during the progress of the video game; and
setting the ability correlated to the selectable object which has received the setting instruction for the character.

18. The video game processing program according to claim 17, wherein the plurality of objects are divided on the setting map in a plurality of areas depending on types of abilities correlated to the plurality of objects.

19. The video game processing program according to claim 17 or 18, wherein the plurality of objects arranged on the setting map are classified by color depending on types of abilities correlated to the objects.

20. The video game processing program according to any one of claims 17 to 19, wherein the setting map is assigned to each of a plurality of characters, the plurality of objects being arranged in a same manner on the setting map assigned to each of the plurality of characters, the program further causing the computer to execute:
displaying a predetermined setting map assigned to a predetermined character specified by an operation input by the player;
deciding at least one selectable object, from among the plurality of objects arranged on the predetermined setting map, to be made selectable in accordance with the operation input by the player, based upon a score acquired for the predetermined character during the progress of the video game and upon an object to which an ability previously set for the predetermined character is correlated;
receiving a selection instruction in accordance with the operation input by the player for the selectable object decided as being selectable on the predetermined setting map;
receiving a setting instruction for an ability correlated to the selectable object on the predetermined setting map, which selectable object has received the selection instruction in accordance with the operation input by the player;
subtracting a score correlated to the selectable object on the predetermined setting map, which selectable object having received the setting instruction, from the score acquired for the predetermined character during the progress of the video game; and
setting the ability correlated to the selectable object which has received the setting instruction for the predetermined character.

21. The video game processing program according to claim 20, further causing the computer to remove a selectable object to which a specified ability has previously been set for another character from the plurality of objects to be made selectable, when deciding at least one selectable object to be made selectable in accordance with an operation input by the player from among the plurality of objects arranged on the predetermined setting map assigned to the predetermined character.

22. The video game processing program according to any one of claims 17 to 21, wherein the plurality of objects arranged on the setting map are displayed so that the object to which the ability has previously been set for the character is correlated, the selectable object made selectable in accordance with the operation input by the player, and a selectable object which has not been set for the character and is made non-selectable in accordance with the operation input by the player are distinguishable.

23. The video game processing program according to any one of claims 17 to 22, further causing the computer to execute removing a selectable object that is not set for the character and is made non-selectable in accordance with the operation input by the player or an ability correlated to the selectable object from among the plurality of objects.

24. The video game processing program according to any one of claims 17 to 22, wherein the video game is a role playing game.
